Europäisches Patentamt

European Patent Office

Office européen des brevets

(19)

(11) **EP 0 812 271 B1**

(12) **FASCICULE DE BREVET EUROPEEN**

(45) Date de publication et mention
de la délivrance du brevet:
**14.04.1999 Bulletin 1999/15**

(21) Numéro de dépôt: **96909204.8**

(22) Date de dépôt: **27.03.1996**

(51) Int. Cl.⁶: $B60G\ 17/015$

(86) Numéro de dépôt international:
**PCT/FR96/00453**

(87) Numéro de publication internationale:
**WO 96/30224 (03.10.1996 Gazette 1996/44)**

(54) **DISPOSITIF DE COMMANDE D'UNE SUSPENSION TELLE QU'UNE SUSPENSION HYDROPNEUMATIQUE DE VEHICULE AUTOMOBILE**

REGELUNGSVORRICHTUNG FÜR EINE AUFHÄNGUNG, WIE EINE HYDROPNEUMATISCHE AUFHÄNGUNG FÜR KRAFTFAHRZEUGE

CONTROL DEVICE FOR A SUSPENSION SUCH AS A HYDROPNEUMATIC SUSPENSION FOR A MOTOR VEHICLE

(84) Etats contractants désignés:
**CH DE ES GB IT LI PT SE**

(30) Priorité: **28.03.1995 FR 9503597**

(43) Date de publication de la demande:
**17.12.1997 Bulletin 1997/51**

(73) Titulaires:
- **AUTOMOBILES PEUGEOT
  75116 Paris (FR)**
- **AUTOMOBILES CITROEN
  92200 Neuilly-sur-Seine (FR)**

(72) Inventeurs:
- **NEY, Yves
  F-57700 Hayange (FR)**
- **TRANZER, Alain
  F-92290 Chatenay-Malabry (FR)**

(74) Mandataire:
**Robert, Jean-François
PSA-Peugeot-Citroen,
Propriété Industrielle,
Route de Gisy
78943 Velizy-Villacoublay Cédex (FR)**

(56) Documents cités:
**EP-A- 0 255 720         DE-A- 4 323 544
FR-A- 2 680 139**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

**Description**

L'invention a pour objet un dispositif de commande d'une suspension telle qu'une suspension hydropneumatique et plus particulièrement une suspension hydropneumatique active de véhicule automobile.

Elle a également pour objet un véhicule d'un type quelconque équipé de ce dispositif.

Le document FR-A-2625711 décrit une suspension hydropneumatique active de véhicule automobile comprenant un vérin hydraulique associé à chacune des roues et muni d'une chambre principale reliée par l'intermédiaire d'un amortisseur à un accumulateur hydropneumatique principal ainsi que trois correcteurs de hauteur associés respectivement à chacun des vérins avant et aux deux vérins de l'essieu arrière. Chaque correcteur est relié d'une part à une source de fluide sous pression par l'intermédiaire d'un accumulateur hydropneumatique de compensation et à un réservoir d'échappement ou bâche et d'autre part à la chambre principale du ou des vérins associés.

Ces correcteurs sont des actionneurs tels que des tiroirs hydrauliques ou des électrovannes aptes à envoyer du liquide dans un circuit incluant la chambre principale du vérin associé ou à en retirer afin de corriger les variations de hauteur de la caisse du véhicule. On obtient ainsi une suspension qui non seulement réagit de façon classique aux irrégularités normales de la route, mais peut aussi compenser les débattements verticaux des éléments de suspension lorsque ceux-ci sont sollicités de façon durable en détente ou en compression de sorte que le véhicule conserve sa stabilité et son assiette par rapport au profil moyen du sol, notamment lors de prises de roulis en virage ou de tangage en accélération et freinage.

Les débattements de la caisse sont corrigés en tenant compte de la hauteur de celle-ci et de différents paramètres représentatifs de l'état dynamique du véhicule. Cependant, il s'agit d'une commande hydromécanique : la correction se fait toujours au même rythme et, suivant les cas, risque d'être trop lente ou trop rapide pour assurer une bonne stabilité du véhicule.

L'invention a pour but d'éliminer cet inconvénient en proposant un dispositif de commande d'une suspension hydropneumatique active de véhicule automobile qui permet d'avoir une excellente stabilité de celui-ci quelles que soient les circonstances ou le style de conduite du conducteur.

Plus précisément, l'invention a pour objet un dispositif de commande d'une suspension telle qu'une suspension hydropneumatique de véhicule automobile comportant plusieurs circuits indépendants dont chacun est associé à un actionneur apte à envoyer du liquide dans ce circuit ou à en retirer, selon une loi de commande prédéterminée, en fonction de la position de la caisse et des variations dans le temps de la position de la caisse, ladite loi tenant compte de l'une au moins des variables suivantes : vitesse de débattement de la caisse, accélération de débattement de celle-ci et dérivée temporelle de cette accélération , caractérisé en ce que ladite loi est représentée par la formule :

$$q = A\,(X\text{-}Xo) + BX' + C\gamma + D\gamma'$$

dans laquelle :

q est le vecteur de commande des actionneurs
X est le vecteur position de la caisse
Xo est le vecteur représentant la position de référence de la caisse
X' est le vecteur vitesse de débattement de la caisse
$\gamma$ est le vecteur accélération de débattement de la caisse
$\gamma'$ est le vecteur dérivée temporelle de cette accélération, et
A,B,C,D sont des matrices dont les termes sont des constantes prédéterminées.

Ces constantes peuvent être déterminées au départ lors de l'installation du système ou être modifiées en cours d'utilisation s'il apparaît que cela peut améliorer la correction.

Dans la présente description, l'expression "vecteur de commande des actionneurs" désigne un vecteur dont les composantes sont des paramètres caractéristiques de l'écoulement du liquide pour chacun des actionneurs respectivement.

Le "vecteur position de la caisse" est un vecteur dont les composantes sont des paramètres représentatifs de la position de la caisse dans l'espace et les composantes des vecteurs X', $\gamma$ et $\gamma'$ sont respectivement les dérivées premières, secondes et troisièmes, par rapport au temps, des composantes du vecteur X.

Dans le cas d'une architecture telle que celle décrite dans le document FR-A-2625711 précité ou celle qui sera décrite ci-après à titre d'exemple, les matrices A,B,C,D peuvent être des matrices diagonales pour simplifier la loi de commande.

Les actionneurs sont commandés en pression ou, de préférence, en débit.

Avantageusement, les termes des matrices A,B,C,D sont modulés par une table de vérité pour tenir compte des incertitudes sur les variables de commande, l'expression "variables de commande" désignant ici les composantes des vecteurs X, X', γ et γ'.

Dans ce cas, pour chaque degré de liberté, la table de vérité est déterminée de manière à éviter notamment les dynamiques contraires.

L'expression "table de vérité" utilisée dans la présente description désigne un tableau dans lequel sont présentés les coefficients dont on affecte les termes des matrices A,B,C,D.

L'expression "dynamique contraire" signifie qu'une variable de commande et sa dérivée sont de signes contraires. Autrement dit, la variation de cette variable tend à s'atténuer, ce qui donne en quelque sorte une correction "naturelle". Si l'on ne tenait pas compte de ce phénomène, la correction au moyen des actionneurs risquerait d'être trop importante et de nuire à la stabilité du véhicule. L'utilisation d'une table de vérité permet d'améliorer notablement la stabilité en adaptant au mieux la correction aux mouvements de la caisse.

Selon encore d'autres caractéristiques du dispositif objet de l'invention :

- la position de la caisse est déterminée par trois paramètres représentant trois degrés de liberté de ce celle-ci;

- ces trois degrés de liberté sont : le roulis, le tangage et le pompage;

- les variables de commande sont soit mesurées, soit calculées, soit estimées.

Le terme "mesurée" employé ici s'entend d'une mesure directe de la grandeur considérée.

Le terme "calculée" désire une détermination indirecte de cette grandeur à partir d'autres mesures sans risque d'erreur dû à une cause extérieure.

Le terme "estimée" désigne une détermination indirecte de ladite grandeur mais avec un risque d'erreur dû à des causes non prises en compte.

De préférence, la position de la caisse et sa vitesse de débattement sont mesurées ou calculées, l'accélération de débattement de la caisse est mesurée ou estimée et la dérivée temporelle de cette accélération est calculée ou estimée.

Selon d'autres caractéristiques enfin du dispositif objet de l'invention :

- l'accélération de débattement de la caisse est estimée en fonction de l'un au moins des paramètres suivants : angle et vitesse du volant de direction, vitesse du véhicule, pression dans le circuit de freinage, position de la pédale d'accélérateur ou du papillon des gaz;

- les actionneurs sont des électrovannes ou des servo-valves proportionnelles en pression ou, de préférence, en débit;

- il comprend des capteurs donnant la position de différents points de la caisse et certains paramètres représentatifs de l'état dynamique du véhicule et reliés à un calculateur apte à déterminer d'une part les paramètres représentatifs de la position de la caisse et, d'autre part, le débit ou la pression nécessaire dans chaque actionneur en fonction de ces paramètres et des autres variables de commande.

Enfin, ladite loi peut être simplifiée afin d'effectuer une correction active sur l'un au moins desdits degrés de liberté et une correction lente sur le ou les autre(s) degré(s) de liberté, par exemple une correction active du roulis et une correction lente du tangage et du pompage.

L'expression "correction active" désigne ici une correction tenant compte des dérivées temporelles successives d'un paramètre représentatif de la position de la caisse comme indiqué ci-dessus tandis que l'expression "correction lente" désigne une correction effectuée de manière lente devant la dynamique des mouvements de la caisse.

L'invention apparaîtra mieux à la lecture de la description qui va suivre, donnée à titre d'exemple non limitatif, faite en référence aux dessins annexés, dans lesquels :

- la figure 1 est une représentation schématique d'une suspension hydropneumatique active de véhicule automobile équipée d'un dispositif de commande selon l'invention ; et

- la figure 2 est un schéma fonctionnel du dispositif de commande de cette suspension.

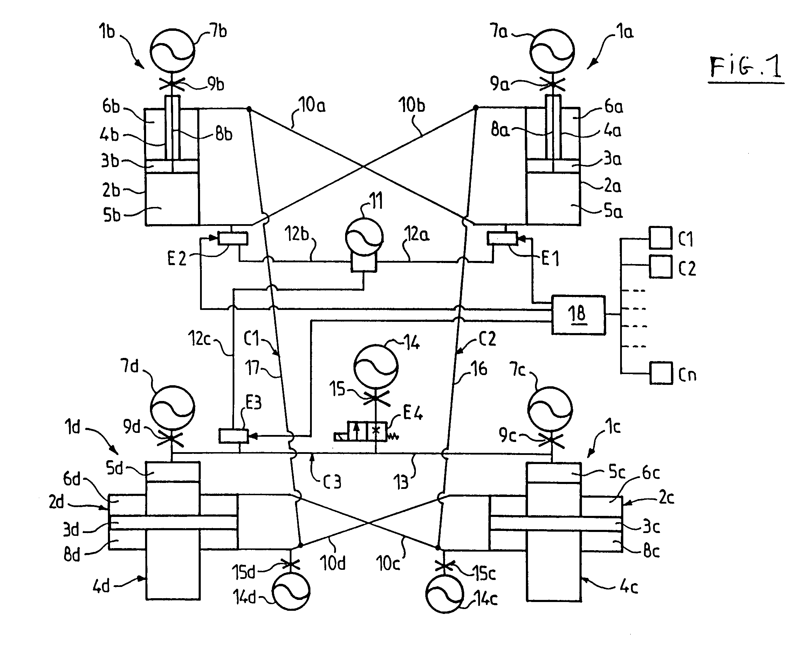

En se reportant d'abord à la figure 1, on voit que cette suspension comporte des vérins 1a, 1b, 1c, 1d associés respectivement aux roues avant droite, avant gauche, arrière droite et arrière gauche.

Chaque vérin 1a, 1b de l'essieu avant se compose d'un cylindre 2a,2b à l'intérieur duquel un piston 3a,3b solidaire d'une tige 4a,4b définit une chambre principale 5a,5b à sa partie inférieure et une chambre annulaire 6a,6b à sa partie supérieure. La chambre principale 5a,5b communique avec un accumulateur hydropneumatique principal 7a,7b par un conduit 8a,8b ménagé dans le piston et la tige et un amortisseur 9a,9b. Le cylindre 2a,2b est relié à un bras de roue (non représenté) tandis que le piston 3a,3b, la tige 4a,4b, l'amortisseur 9a,9b et l'accumulateur 7a,7b sont solidaires de la caisse du véhicule (non représentée).

Pour assurer la fonction anti-dévers de l'essieu avant, on a prévu un conduit 10a reliant la chambre principale 5a du vérin avant droit à la chambre annulaire 6b du vérin avant gauche et un conduit 10b reliant la chambre principale 5b du vérin avant gauche à la chambre annulaire 6a du vérin avant droit.

Deux actionneurs tels que des électrovannes ou des servo-valves E1 et E2 sont reliés d'une part aux conduits 10a et 10b respectivement et d'autre part à un accumulateur hydropneumatique de compensation 11 par des conduits 12a et 12b. Par ailleurs, les actionneurs E1 et E2 peuvent débiter dans un réservoir ou bâche (non représenté).

Chaque vérin 1c,1d de l'essieu arrière se compose essentiellement d'un cylindre 2c,2d à l'intérieur duquel coulisse une tige 4c,4d. La forme du cylindre et de la tige sont telles que soit définie une chambre principale 5c,5d à la partie supérieure du cylindre dans laquelle coulisse la partie supérieure formant piston de la tige 4c,4d : la chambre principale 5c,5d communique avec un accumulateur hydropneumatique principal 7c,7d par un amortisseur 9c,9d.

De plus, la tige 4c,4d porte un piston 3c,3d coulissant dans une autre partie du cylindre où il sépare une chambre supérieure 6c,6d et une chambre inférieure 8c,8d.

La tige 4c,4d est reliée à un bras support de roue (non représenté) tandis que le cylindre 2c,2d, l'amortisseur 9c,9d et l'accumulateur 7c,7d sont solidaires de la caisse du véhicule.

Les chambres principales 5c,5d sont reliées par un conduit 13. Un troisième actionneur E3, semblable aux deux premiers, communique d'une part avec ce conduit 13 et d'autre part avec l'accumulateur de compensation 11 par un conduit 12c et peut également débiter dans le réservoir précité.

Ainsi, les chambres principales 5c,5d assurent l'anti-pompage de l'essieu arrière ainsi que le contrôle de hauteur de celui-ci grâce à l'actionneur E3. Eventuellement, un accumulateur hydropneumatique supplémentaire 14, associé à un amortisseur 15, peut être mis ou non en communication avec le conduit 13 par une électrovanne E4 afin de faire varier les caractéristiques de raideur et d'amortissement de l'essieu arrière.

Quant aux chambres supérieures 6c,6d et inférieures 8c,8d, elles assurent la fonction anti-dévers de l'essieu arrière grâce à un conduit 10c reliant la chambre inférieure 8c du vérin arrière droit à la chambre supérieure 6d du vérin arrière gauche et un conduit 10d reliant la chambre inférieure 8d du vérin arrière gauche à la chambre supérieure 6c du vérin arrière droit. Les conduits 10c et 10d communiquent avec des accumulateurs hydropneumatiques 14c et 14d respectivement à travers des amortisseurs 15c et 15d.

Le fonctionnement d'un essieu de ce type est connu en soi et décrit par exemple dans les documents FR-A-2625711 et FR-A-2581596 et ne sera pas davantage détaillé ici.

La fonction anti-dévers est complétée par un croisement entre les vérins avant et arrière grâce à un conduit 16 reliant les conduits 10c et 10b et un conduit 17 reliant les conduits 10d et 10a.

On a ainsi réalisé une suspension à trois circuits indépendants :

Le premier circuit C1 comprend les chambres 5a et 6b, le conduit 8a l'amortisseur 9a, l'accumulateur 7a, les conduits 10a, 17, 10d, les chambres 6c et 8d, l'amortisseur 15d et l'accumulateur 14d.

Le deuxième circuit C2 comprend les chambres 5b et 6a, le conduit 8b, l'amortisseur 9b, l'accumulateur 7b, les conduits 10b, 16, 10c, les chambres 8c et 6d, l'amortisseur 15c et l'accumulateur 14c.

Le troisième circuit C3 comprend les chambres 5c et 5d, le conduit 13, les accumulateurs 7c et 7d, les amortisseurs 9c et 9d et éventuellement l'accumulateur 14, l'amortisseur 15 et l'actionneur E4.

On voit que les actionneurs E1, E2, E3 sont disposés de manière à injecter du liquide dans chacun des circuits C1, C2, C3 respectivement ou à en retirer.

Les actionneurs E1, E2, E3 sont des électrovannes ou des servo-valves proportionnelles en pression ou, de préférence, en débit tandis que l'électrovanne E4 est une électrovanne tout ou rien permettant d'établir ou de couper la communication avec l'accumulateur 14 et l'amortisseur 15.

Les actionneurs E1, E2, E3 sont commandés par un calculateur 18 qui est relié d'autre part à un ensemble de capteurs $c_1$ à $c_n$ dont trois donnent la hauteur de différents points de la caisse liés à chacun des trois circuits C1, C2 et C3 respectivement et dont les autres donnent les différents paramètres représentatifs de l'état dynamique du véhicule servant à déterminer les composantes des vecteurs X', $\gamma$ et $\gamma'$ précités. Ainsi, le calculateur 18 pilote les actionneurs d'une manière qui va être expliquée plus en détail ci-dessous.

Dans cet exemple, la loi de commande est simplifiée afin d'effectuer une correction active de roulis et une correction lente de tangage et de pompage. En effet, les inventeurs ont établi que l'on pouvait obtenir une stabilité suffisante du véhicule en n'effectuant la correction active que sur un seul paramètre, ce qui présente l'avantage de simplifier le dispositif.

Dans l'architecture de suspension illustrée au dessin, le roulis peut être contrôlé au moyen des deux actionneurs avant E1 et E2. Le tangage et la hauteur du véhicule peuvent être contrôlés en contrôlant le pompage de l'essieu arrière grâce à l'actionneur E3 qui contrôle la hauteur de l'essieu arrière. Enfin, le pompage de l'essieu avant peut être contrôlé au moyen des actionneurs avant E1 et E2.

Dans l'exemple décrit ici, la loi de commande se réduit aux deux formules suivantes :

$$R = a\varphi + b\,d\,\varphi dt + c\,\gamma_t + d\,d\gamma_t/dt \tag{1}$$

$$P = K\,(p - M) + L\,dp/dt\;(2) \tag{2}$$

dans lesquelles :

$\varphi$ est l'angle de roulis
$\gamma_t$ est l'accélération transversale
p représente le pompage
R et P sont les corrections en débit sur le roulis et le pompage respectivement
$d\varphi/dt$, $d\gamma_t/dt$ et $dp/dt$ sont les dérivées temporelles de $\varphi$, $\gamma_t$ et p
a, b, c, d, K, M et L sont des constantes prédéterminées, M représentant l'assiette de référence du véhicule.

L'expression "correction en débit sur le roulis" (ou le pompage) désigne le seul débit nécessaire dans l'actionneur considéré pour corriger le roulis (ou le pompage), lequel s'ajoute aux autres débits circulant dans l'actionneur. Pour la correction du roulis, les débits correspondants dans E1 et E2 sont égaux et opposés. En angle de roulis, le système constitué par la caisse sur sa suspension se comporte comme un troisième ordre vu de la source de puissance constituée par l'accumulateur de compensation 11.

Plus précisément, un débit dans les actionneurs engendre une variation de volume dans un élément élastique tel que les accumulateurs 1a, 1b et donc une augmentation du couple de contre-réaction au couple de roulis engendré par l'accélération latérale subie par la caisse : en théorie donc, une commande en débit exactement proportionnelle à la dérivée temporelle du couple de roulis appliqué à la caisse est suffisante pour assurer la correction.

Un estimateur efficace de cette variable est la dérivée temporelle de l'accélération transversale $\gamma_t$, qui correspond à la dérivée d'ordre 3, par rapport au temps, d'un paramètre représentatif de la position de la caisse.

L'accélération transversale peut être mesurée directement à l'aide d'un accéléromètre ou estimée, c'est-à-dire reconstituée par calcul, à partir de variables représentatives de l'état dynamique du véhicule, par exemple vitesse et angle du volant et vitesse du véhicule.

Si cette manière de faire est moins précise que la mesure directe, elle présente l'avantage d'anticiper la connaissance de l'accélération car, à cause de la déformation des pneumatiques, il s'écoule un certain temps entre l'instant où le conducteur commence à tourner le volant et l'instant où le véhicule commence à subir effectivement une accélération latérale.

Cependant, les erreurs dues à cette reconstruction risquent d'aboutir à un débit inadapté dans les actionneurs et donc à une correction inadéquate : c'est pourquoi il faut tenir compte de termes d'ordre temporel inférieur. Cependant, pour éviter une trop grande complexité du système, on peut se limiter à l'accélération transversale et à l'angle et à la vitesse angulaire de roulis, ce qui conduit à la formule (1) ci-dessus. Comme indiqué plus haut, l'accélération transversale peut être mesurée par un accéléromètre ou estimée à partir de l'angle et de la vitesse du volant et de la vitesse du véhicule. Quant au roulis, il peut être calculé à partir des indications de capteurs donnant la hauteur de débattement entre la roue et la caisse (par exemple un capteur pour chaque roue avant et un capteur pour l'essieu arrière).

Dans l'exemple décrit, le deuxième membre de la formule (1) contient quatre termes car on fait une correction active de roulis. Le deuxième membre de la formule (2) ne contient que les termes en p et dp/dt car on fait une correction lente de pompage.

Dans le cas où les variables telles que l'accélération transversale ou longitudinale sont estimées, c'est-à-dire calculées à partir de variables extrinsèques au système caisse-suspension telles que l'angle et la vitesse du volant, les résultats obtenus peuvent ne pas correspondre à la réalité car on ne tient pas compte d'éléments tels que la hauteur du centre de gravité par rapport au sol, la masse du véhicule, l'inertie en roulis et surtout le coefficient d'adhérence des pneumatiques. Par exemple, sur route verglacée, dans le cas le plus défavorable, le véhicule risque d'aller tout droit malgré un coup de volant du conducteur : le calcul donnera une accélération latérale alors qu'en fait, celle-ci sera nulle.

Selon l'invention, on corrige cet inconvénient de manière simple en modulant les gains représentés par les composantes des matrices A, B, C, D. Cette modulation se fait en les affectant de coefficients compris entre 0 et 1.

Comme indiqué ci-dessus, il s'agit d'éviter les dynamiques contraires et d'éviter toute surcriticité sur la régulation, c'est-à-dire une correction trop importante. On comprend donc que les coefficients précités dépendent des signes respectifs des variables de commande.

Pour des raisons de simplification, ils peuvent être choisis égaux à 0 ou 1. Dans l'exemple de loi de commande simplifiée décrit ici, la table de vérité se présente sous la forme suivante :

| | | $\varphi$, $d\varphi/dt$ | | | |
|---|---|---|---|---|---|
| | | ++ | +- | -+ | -- |
| $\gamma_t$,$d\gamma_t/dt$ | ++ | [1 1 1] | [0 1 1] | [0 0 1] | [1 0 0] |
| | +- | [1 1 0] | [0 1 0] | [0 0 1] | [1 0 1] |
| | -+ | [1 0 1] | [0 0 1] | [0 1 0] | [1 1 0] |
| | -- | [1 0 0] | [0 0 1] | [0 1 1] | [1 1 1] |

dans laquelle les chiffres entre crochets lus de gauche à droite sont les coefficients dont on affecte les constantes b, c, d de la formule (1) ci-dessus respectivement.

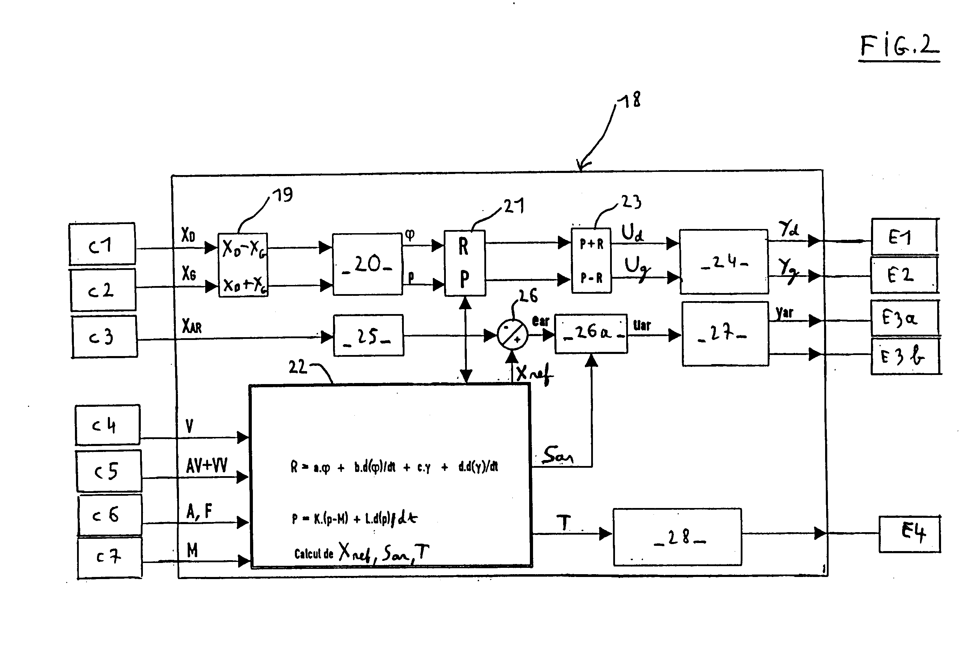

On va maintenant décrire plus en détail le dispositif de commande en référence à la figure 2. On voit sur cette figure que le calculateur 18 est relié à des capteurs c1 à c7 donnant la position de différents points de la caisse et certains paramètres représentatifs de l'état dynamique du véhicule.

Les capteurs c1 et c2 donnent respectivement la hauteur avant droite $X_D$ et la hauteur avant gauche $X_G$ tandis que c3 donne la hauteur $X_{AR}$ de l'essieu arrière. Le mot "hauteur" employé ici désigne la hauteur d'un point lié à la caisse par rapport à un point lié à la roue. Les signaux $X_D$ et $X_G$ sont d'abord transmis à une première unité 19 qui calcule la différence $X_D - X_G$ représentant le roulis $\varphi$ et la somme $X_D + X_G$ représentant le pompage p de l'essieu avant. Les signaux correspondants, après avoir été filtrés par un filtre basse fréquence 20, sont transmis à une unité 21 qui détermine les corrections en débit R et P selon les formules (1) et (2) ci-dessus et la table de vérité précédemment décrite. Le rôle du filtre 20 est notamment d'éliminer les perturbations dues aux inégalités de la route.

L'unité 21 est associée à une sous-unité 22 (laquelle peut être intégrée à l'unité 21) qui d'une part détermine les constantes a, b, c, d, K, M, L de ces formules et d'autre part détermine les dérivées temporelles $d\varphi/dt$ et $dp/dt$ de $\varphi$ et p respectivement ainsi que l'accélération transversale $\gamma$ et la dérivée temporelle $d\gamma/dt$ de cette accélération. Ces calculs sont effectués à partir des signaux fournis par les capteurs c4, c5 et c6 qui donnent respectivement la vitesse V du véhicule (c4), l'angle AV et la vitesse VV du volant (c5) et des grandeurs (A,F) représentatives de l'accélération et du freinage (c6). Les termes $d\varphi/dt$ et $dp/dt$ sont obtenus par différentiation. L'accélération $\gamma$ est calculée à partir de l'angle du volant et de la vitesse du véhicule tandis que $d\gamma/dt$ est déterminée à partir de la vitesse du volant et de la vitesse du véhicule. Ces derniers calculs ne seront pas explicités davantage ici car ils sont connus en soi et décrits par exemple dans le document FR-A-2680139.

Les signaux R et P sont ensuite transmis à une unité 23 qui calcule P + R et P - R qui représentent les corrections à appliquer par les actionneurs E1 et E2 sur les circuits correspondants C1 et C2 respectivement. En effet, la correction en pompage est la même pour les deux roues d'un même essieu tandis que les corrections en roulis sont égales et opposées. Les signaux correspondants Ud et Ug sont transmis à l'unité 24 de commande des électrovannes avant (qui, dans le cas présent, sont des électrovannes proportionnelles), laquelle transforme ces signaux numériques en signaux de commande Yd et Yg correspondant à des débits et appliqués aux électrovannes E1 et E2 respectivement, les signaux Yd et Yg étant des signaux électriques de puissance.

Ce dispositif assure également la correction lente de la hauteur de l'essieu arrière. Pour cela, le signal $X_{AR}$ fourni par le capteur c3 passe d'abord à travers un filtre basse fréquence 25 afin de ne corriger que les variations significatives de hauteur. Le signal ainsi filtré est transmis à une unité 26 qui détermine la correction à appliquer $e_{ar}$ en effectuant la différence entre la hauteur de référence Xref et la hauteur mesurée $X_{AR}$. La hauteur de référence dépend de la position du levier de sélection manuelle de hauteur qui équipe la plupart des véhicules à suspension hydropneumatique et éventuellement de la vitesse V du véhicule donnée par le capteur c4. Elle est déterminée et transmise à l'unité 26 par la sous-unité 22 en fonction des indications du capteur c7 de la position de ce levier et éventuellement du capteur c4. La valeur de la correction $e_{ar}$ est ensuite comparée, dans un comparateur 26a, à un seuil $S_{ar}$ préalablement déterminé et également donné par la sous-unité 22, en dessous duquel on n'effectue pas la correction. Le signal correspondant $U_{ar}$ est ensuite transmis à l'unité de commande 27 de l'actionneur arrière E3. Celui-ci peut être une électrovanne proportionnelle ou être constitué de deux électrovannes tout ou rien, à savoir une électrovanne d'admission E3a et une électrovanne d'échappement E3b. Dans ce cas, le signal $Y_{ar}$ est transmis, par l'unité 27, à l'une ou l'autre des électrovannes E3a et E3b selon qu'il faille admettre du liquide dans le circuit C3 ou en retirer.

Enfin, dans le cas où l'essieu arrière est équipé d'un accumulateur hydropneumatique supplémentaire 14, comme illustré à la figure 1, pour en faire varier les caractéristiques de raideur et d'amoitissement, le calculateur 18 est équipé d'une commande 28 de régulation de raideur qui pilote l'électrovanne E4 en fonction d'un signal T transmis par la sous-unité 22, ce signal étant fonction des paramètres fournis par les capteurs c4 à c6 selon une loi prédéterminée.

On a donc réalisé selon l'invention un dispositif de commande de suspension active de véhicule automobile qui permet une excellente stabilité de celui-ci puisque la correction tient compte non seulement de la position de la caisse, mais aussi des dérivées d'ordre 1, 2 et 3 de celle-ci par rapport au temps, ce qui permet une adaptation constate. De plus, suivant l'architecture de suspension utilisée, la loi peut être simplifiée, ce qui réduit la complexité et le coût du dispositif. Quant aux erreurs dues à une mauvaise estimation de certaines variables, leurs effets sont éliminés de manière très simple grâce à la modulation des gains par une table de vérité.

Il est bien entendu que l'invention ne se limite pas au seul mode de réalisation décrit et représenté, mais qu'elle en couvre au contraire toutes les variantes entrant dans le cadre des revendications qui suivent. C'est ainsi qu'elle peut s'appliquer par exemple à une commande en anti-tangage actif. Cette dernière s'applique à une architecture de suspension dans laquelle les vérins des roues situées d'un même côté de l'essieu avant et de l'essieu arrière sont croisés pour obtenir l'anti-tangage. Dans ce cas, c'est l'accélération longitudinale qui est à prendre en compte, celle-ci pouvant être mesurée ou estimée à partir de paramètres tels que la vitesse du véhicule, la pression sur la pédale de frein et la position de l'accélérateur. Enfin, si la description a été faite en référence à une suspension hydropneumatique, l'invention s'applique aussi bien à une suspension pneumatique.

**Revendications**

1. Dispositif de commande d'une suspension telle qu'une suspension hydropneumatique de véhicule automobile comportant plusieurs circuits indépendants (C1, C2, C3) dont chacun est associé à un actionneur (E1, E2, E3) apte à envoyer du fluide dans ce circuit ou à en retirer selon une loi de commande prédéterminée en fonction de la position de la caisse et des variations dans le temps de la position de la caisse, ladite loi tenant compte de l'une au moins des variables suivantes : vitesse de débattement de la caisse, accélération de débattement de celle-ci et dérivée temporelle de cette accélération, caractérisé en ce que ladite loi est représentée par la formule :

$$q = A\,(X - Xo) + BX' + C\gamma + D\gamma'$$

dans laquelle :

      q est le vecteur de commande des actionneurs
      X est le vecteur position de la caisse
      Xo est le vecteur représentant la position de référence de la caisse
      X' est le vecteur vitesse de débattement de la caisse
      $\gamma$ est le vecteur accélération de débattement de la caisse
      $\gamma'$ est le vecteur dérivée temporelle de cette accélération et
      A,B,C,D sont des matrices dont les termes sont des constantes prédéterminées.

2. Dispositif selon la revendication 1, caractérisé en ce que les actionneurs sont commandés en pression ou, de préférence, en débit.

3. Dispositif selon la revendication 1, caractérisé en ce que les termes des matrices A, B, C, D sont modulés par une table de vérité afin de tenir compte des incertitudes sur les variables de commande.

4. Dispositif selon l'une des revendications précédentes, caractérisé en ce que la position de la caisse est déterminée par trois paramètres représentant trois degrés de liberté ce celle-ci.

5. Dispositif selon la revendication 4, caractérisé en ce que les trois degrés de liberté sont : le roulis, le tangage et le pompage.

6. Dispositif selon la revendication 4 ou 5, caractérisé en ce que, pour chaque degré de liberté, la table de vérité est déterminée de manière à interdire notamment les dynamiques contraires.

7. Dispositif selon l'une des revendications précédentes, caractérisé en ce que les variables de commande sont soit mesurées, soit calculées, soit estimées.

8. Dispositif selon la revendication 7, caractérisé en ce que la position de la caisse et sa vitesse de débattement sont mesurées ou calculées, l'accélération de débattement de la caisse est mesurée ou estimée et la dérivée temporelle de cette accélération est calculée ou estimée.

9. Dispositif selon la revendication 8, caractérisé en ce que l'accélération de débattement de la caisse est estimée en fonction de l'un au moins des paramètres suivants : angle et vitesse du volant de direction, vitesse du véhicule, pression dans le circuit de freinage, position de la pédale d'accélération ou du papillon des gaz.

10. Dispositif selon l'une des revendications précédentes, caractérisé en ce que ladite loi se présente sous une forme simplifiée afin d'effectuer une correction active sur l'un au moins desdits degrés de liberté et une correction lente sur le ou les autre(s) degré(s) de liberté.

11. Dispositif selon la revendication 10, caractérisé en ce que ladite loi est adaptée pour effectuer une correction active du roulis et une correction lente du tangage et du pompage.

12. Dispositif selon la revendication 11, caractérisé en ce que ladite loi est représentée par les deux formules suivantes :

$$R = a\varphi + b \frac{d\varphi}{dt} + c\, \gamma_t + d\, d\gamma_t/dt \tag{1}$$

$$P = K\,(p - M) + L \frac{dp}{dt} \tag{2}$$

dans lesquelles :

$\varphi$ est l'angle de roulis
$\gamma_t$ est l'accélération transversale
p représente le pompage
R et P sont les corrections en débit sur le roulis et le pompage respectivement
$d\varphi/dt$, $d\gamma_t/dt$ et $dp/dt$ sont les dérivées temporelles de $\varphi$, $\gamma_t$ et p
a, b, c, d, K, M et L sont des constantes prédéterminées, M représentant l'assiette de référence du véhicule.

13. Dispositif selon les revendications 3 et 12, caractérisé en ce que la table de vérité est représentée par la table suivante :

| | | $\varphi$, $d\varphi/dt$ | | | |
|---|---|---|---|---|---|
| | | ++ | +- | -+ | -- |
| $\gamma_t$, $d\gamma_t/dt$ | ++ | [1 1 1] | [0 1 1] | [0 0 1] | [1 0 0] |
| | +- | [1 1 0] | [0 1 0] | [0 0 1] | [1 0 1] |
| | -+ | [1 0 1] | [0 0 1] | [0 1 0] | [1 1 0] |
| | -- | [1 0 0] | [0 0 1] | [0 1 1] | [1 1 1] |

dans laquelle les chiffres entre crochets lus de gauche à droite sont les coefficients dont on affecte les constantes b, c, d de la formule (1) ci-dessus respectivement.

14. Dispositif selon l'une des revendications précédentes, caractérisé en ce que les actionneurs (E1, E2, E3) sont des électrovannes ou des servovalves proportionnelles en pression ou, de préférence, en débit.

15. Dispositif selon l'une des revendications précédentes, caractérisé en ce qu'il comprend des capteur de position ($c_1$ à $c_n$) donnant la position de différents points de la caisse et reliés à un calculateur (18) apte à déterminer d'une part les paramètres représentatifs de la position de la caisse et, d'autre part, le débit ou la pression nécessaire dans chaque actionneur en fonction de ces paramètres et des autres variables de commande.

16. Véhicule automobile équipé d'un dispositif selon l'une quelconque des revendications précédentes.

**Claims**

1.  Control device for a suspension such as a hydropneumatic suspension of a motor vehicle, comprising several independent circuits (C1, C2, C3) each of which is associated with an actuator (E1, E2, E3) capable of sending fluid into the circuit or removing it according to a predetermined control law, as a function of the position of the body and variations in time of the position of the body, said law taking account of at least one of the following variables: speed of deflection of the body, acceleration of deflection thereof and time derivative of this acceleration, characterised in that said law is represented by the formula:

$$q = A (X - Xo) + BX' + C\gamma + D\gamma'$$

    in which:

    q is the actuator command vector
    X is the body position vector
    Xo is the vector representing the reference position of the body
    X' is the vector for speed of deflection of the body
    $\gamma$ is the vector for acceleration of deflection of the body
    $\gamma'$ is the vector for time derivative of this acceleration and
    A,B,C,D are matrices, the terms of which are predetermined constants.

2.  Device according to Claim 1, characterised in that the actuators are controlled as to pressure or, preferably, flow rate.

3.  Device according to Claim 1, characterised in that the terms of the matrices A, B, C, D are modulated by a truth table in order to take account of uncertainties as to the control variables.

4.  Device according to one of the preceding claims, characterised in that the position of the body is determined by three parameters representing three degrees of freedom thereof.

5.  Device according to Claim 4, characterised in that the three degrees of freedom are: roll, pitch and surge.

6.  Device according to Claim 4 or 5, characterised in that, for each degree of freedom, the truth table is determined so as to prevent, in particular, contrary dynamics.

7.  Device according to one of the preceding claims, characterised in that the control variables are either measured or calculated or estimated.

8.  Device according to Claim 7, characterised in that the position of the body and its speed of deflection are measured or calculated, the acceleration of deflection of the body is measured or estimated and the time derivative of this acceleration is calculated or estimated.

9.  Device according to Claim 8, characterised in that the acceleration of deflection of the body is estimated as a function of at least one of the following parameters: angle and speed of the steering wheel, speed of the vehicle, pressure inside the brake system, position of the acceleration pedal or the throttle valve.

10. Device according to one of the preceding claims, characterised in that said law takes a simplified form in order to produce an active correction on at least one of said degrees of freedom and a slow correction on the other degree(s) of freedom.

11. Device according to claim 10, characterised in that said law is adapted so as to produce an active correction of roll and a slow correction of pitch and surge.

12. Device according to claim 11, characterised in that said law is represented by the following two formulae:

$$R = a\varphi + b\frac{d\varphi}{dt} + c\gamma_t + d\,d\gamma_t/dt \qquad (1)$$

$$P = K\,(p\text{-}M) + L\,\frac{dp}{dt} \qquad (2)$$

in which

φ is the angle of roll
$\gamma_t$ is the transverse acceleration
p represents surge
R and P are the corrections to flow rate on the roll and surge respectively
dφ/dt, $d\gamma_t$/dt and dp/dt are the time derivatives of φ, $\gamma_t$ and p
a, b, c, d, K, M and L are predetermined constants, M representing the reference trim of the vehicle.

**13.** Device according to Claims 3 and 12, characterised in that the truth table is represented by the following table:

|  |  | φ, dφ/dt | | | |
|---|---|---|---|---|---|
|  |  | + + | + - | - + | - - |
| $\gamma_t$, $d\gamma_t$/dt | + + | [1 1 1] | [0 1 1] | [0 0 1] | [1 0 0] |
|  | + - | [1 1 0] | [0 1 0] | [0 0 1] | [1 0 1] |
|  | - + | [1 0 1] | [0 0 1] | [0 1 0] | [1 1 0] |
|  | - - | [1 0 0] | [0 0 1] | [0 1 1] | [1 1 1] |

in which the figures between square brackets, from left to right, are the coefficients assigned to the constants b, c, d in formula (1) above, respectively.

**14.** Device according to one of the preceding claims, characterised in that the actuators (E1, E2, E3) are solenoid valves or servo-valves proportional as to pressure or, preferably, as to flow rate.

**15.** Device according to one of the preceding claims, characterised in that it comprises position sensors ($c_1$ to $c_n$) giving the position of various points of the body and connected to a computer (18) capable of determining, on the one hand, the parameters representing the position of the body and, on the other hand, the flow rate or pressure necessary in each actuator as a function of these parameters and other control variables.

**16.** Motor vehicle fitted with a device according to any one of the preceding claims.

**Patentansprüche**

**1.** Regelungsvorrichtung für eine Aufhängung wie eine hydropneumatische Aufhängung eines Kraft- bzw. Motorfahrzeuges, die mehrere unabhängige Kreisläufe (C1, C2, C3) aufweist, von denen jeder einem Betätigungselement (E1, E2, E3) zugeordnet ist, das geeignet ist, Fluid in diesen Kreislauf zu schicken oder aus diesem herauszunehmen, gemäß einem vorbestimmten Steuerungs- bzw. Regelungsgesetz in Abhängigkeit von der Lage des Gehäuses und den Veränderungen der Lage des Gehäuses über die Zeit, wobei das Gesetz wenigstens eine der folgenden Variablen berücksichtigt: Durchfederungsgeschwindigkeit des Gehäuses, Federungsbeschleunigung desselben und zeitliche Ableitung dieser Beschleunigung, dadurch gekennzeichnet, daß das Gesetz wiedergegeben ist durch die Formel:

$$q = A(X\text{-}X_0) + BX' + C\gamma + D\gamma',$$

in der:

q           der Regelungsvektor der Betätigungselemente ist
X           der Lagevektor des Gehäuses ist
$X_0$          der Vektor ist, der die Bezugsposition des Gehäuses wiedergibt

X'  der Vektor der Federungsgeschwindigkeit des Gehäuses ist

γ  der Federungsbeschleunigungsvektor des Gehäuses ist

γ'  der Vektor der zeitlichen Ableitung dieser Beschleunigung ist, und

A,B,C,D  Matrizen sind, deren Terme vorherbestimmte Konstanten sind.

2. Vorrichtung nach Anspruch 1, dadurch gekennzeichnet, daß die Betätigungselemente druckgesteuert oder vorzugsweise mengengesteuert sind.

3. Vorrichtung nach Anspruch 1, dadurch gekennzeichnet, daß die Matrizenterme A, B, C, D durch eine Wertetabelle verändert werden, um Unsicherheiten in den Regelungsvariablen zu berücksichtigen.

4. Vorrichtung nach einem der vorhergehenden Ansprüche, dadurch gekennzeichnet, daß die Lage des Gehäuses durch drei Parameter festgelegt ist, die durch drei Freiheitsgrade derselben wiedergegeben werden.

5. Vorrichtung nach Anspruch 4, dadurch gekennzeichnet, daß die drei Freiheitsgrade die Rollbewegung, die Tauchschwingung bzw. Nickschwingung und das Pendeln sind.

6. Vorrichtung nach Anspruch 4 oder 5, dadurch gekennzeichnet, daß die Wertetabelle für jeden Freiheitsgrad in der Weise festgelegt wird, daß insbesondere die entgegengesetzten Schwingungen verhindert werden.

7. Vorrichtung nach einem der vorhergehenden Ansprüche dadurch gekennzeichnet, daß die Regelungsvariablen entweder gemessen, errechnet oder geschätzt werden.

8. Vorrichtung nach Anspruch 7, dadurch gekennzeichnet, daß die Lage des Gehäuses und seine Federungsgeschwindigkeit gemessen oder errechnet werden, die Federungsbeschleunigung des Gehäuses gemessen oder geschätzt wird und die zeitliche Ableitung dieser Beschleunigung errechnet oder geschätzt wird.

9. Vorrichtung nach Anspruch 8, dadurch gekennzeichnet, daß die Federungsbeschleunigung des Gehäuses geschätzt wird in Abhängigkeit wenigstens eines der folgenden Parameter: Winkel und Geschwindigkeit des Lenkrades, Geschwindigkeit des Fahrzeugs, Druck innerhalb des Bremskreislaufs, Position des Gaspedals oder der Drosselklappe.

10. Vorrichtung nach einem der vorhergehenden Ansprüche, dadurch gekennzeichnet, daß das Gesetz in einer vereinfachten Form vorliegt, um eine aktive Korrektur wenigstens von einem der Freiheitsgrade und eine langsame Korrektur des einen weiteren bzw. der weiteren Freiheitsgrade durchzuführen.

11. Vorrichtung nach Anspruch 10, dadurch gekennzeichnet, daß das Gesetz geeignet ist, eine aktive Korrektur der Rollbewegung und eine langsame Korrektur der Tauchschwingung bzw. der Nickschwingung und des Pendelns durchzuführen.

12. Vorrichtung nach Anspruch 11, dadurch gekennzeichnet, daß das Gesetz durch die zwei folgenden Formeln wiedergegeben wird:

$$R = a\varphi + b \frac{d\gamma}{dt} + c\gamma_t + d \, d\gamma_t/dt \tag{1}$$

$$p = K\,(p\text{-}M) + L \frac{dp}{dt} \tag{2}$$

in denen:

φ der Winkel der Rollbewegung ist

γt die schräg verlaufende Beschleunigüng ist

p das Pendeln wiedergibt

R und P die mengenmäßigen Korrekturen der Rollbewegung bzw. der Tauchschwingung/Nickschwingung

dφ/dt sind, $d\gamma_t/dt$ und dp/dt die zeitlichen Ableitungen von φ, $\gamma_t$ und p sind;

a, b, c, d, K, M und L die vorher festgelegten Konstanten sind, wobei M die Bezugsanordnung des Fahrzeugs wiedergibt.

13. Vorrichtung nach den Ansprüchen 3 und 12, dadurch gekennzeichnet, daß die Wertetabelle durch die folgende Tabelle wiedergegeben wird:

| | | $\varphi$, d$\varphi$/dt | | | |
|---|---|---|---|---|---|
| | | ++ | +- | -+ | -- |
| $\gamma_t$, d$\gamma_t$/dt | ++ | [1 1 1] | [0 1 1] | [0 0 1] | [1 0 0] |
| | +- | [1 1 0] | [0 1 0] | [0 0 1] | [1 0 1] |
| | -+ | [1 0 1] | [0 0 1] | [0 1 0] | [1 1 0] |
| | -- | [1 0 0] | [0 0 1] | [0 1 1] | [1 1 1] |

in der die Zahlen in eckigen Klammern von links nach rechts die Koeffizienten sind, die die Konstanten b, c bzw. d der obigen Formel (1) beeinflussen.

14. Vorrichtung nach einem der vorhergehenden Ansprüche, dadurch gekennzeichnet, daß die Betätigungselemente (E1, E2, E3) Elektroventile oder Servoventile sind, die proportional zum Druck, oder vorzugsweise, zur Menge sind.

15. Vorrichtung nach einem der vorhergehenden Ansprüche, dadurch gekennzeichnet, daß sie Positionsfühler (c1 bis cn) aufweist, die die Position von verschiedenen Punkten des Gehäuses angeben und die mit einem Rechner (18) verbunden sind, der geeignet ist, zum einen die repräsentativen Parameter der Position des Gehäuses und zum anderen die benötigte Menge oder den benötigten Druck in jedem Betätigungselement gemäß dieser Parameter und den anderen Regelungsvariablen, festzulegen.

16. Kraftfahrzeug, das eine Vorrichtung nach einem der vorhergehenden Ansprüche aufweist.

FIG.1

EP 0 812 271 B1

FIG.2

18

c1 → $X_D$ → | $X_D - X_G$ / $X_D + X_G$ | (19) → | _20_ | → φ, p → | R / P | (21) → | P+R / P−R | (23) → $U_d$, $U_g$ → | _24_ | → $Y_d$, $Y_g$ → E1, E2

c2 → $X_G$

c3 → $X_{AR}$ → | _25_ | → (26) ⊖ → ear → | _26a_ | → Uar → | _27_ | → yar → E3a, E3b

$X_{ref}$

San

c4 → V

c5 → AV+VV

c6 → A, F

c7 → M

(22)

$$R = a.\varphi + b.d(\varphi)/dt + c.\gamma + d.d(\gamma)/dt$$

$$P = K.(p-M) + L.d(p)\int dt$$

Calcul de $X_{ref}$, San, T

T → | _28_ | → E4